# EUROPEAN PATENT APPLICATION

(11) **EP 2 977 575 A1**
(43) Date of publication of application: **27.01.2016**
(21) Application number: 14767520.1
(22) Date of filing: 05.03.2014
(51) Int. Cl.: F01N 3/08, F02D 21/08, F02D 29/02, F02D 41/04

(54) **EXHAUST PURIFICATION SYSTEM AND SHIP COMPRISING SAME**

(30) Priority: 18.03.2013 JP 2013055028; 18.03.2013 JP 2013055029
(71) Applicant: Yanmar Co., Ltd., Osaka-shi, Osaka 530-8311 (JP)
(72) Inventor: ASAI Gou, Osaka-shi, Osaka 530-8311 (JP)
(74) Representative: Jostarndt, Hans-Dieter
(86) International application number: PCT/JP2014/055604
(87) International publication number: WO 2014/148256

(57) **Abstract**

The purpose of the present invention is to provide: an exhaust purification system capable of suppressing a discharged NOx amount to no more than a NOx limit and of selecting a combination of means for decreasing NOx in accordance with the operation state of an engine and the state of the exhaust purification system; and a ship comprising same. The exhaust purification system for the engine (1) has a reduction catalyst provided inside an exhaust pipe (3) for the engine (1) and is configured such that: the NOx discharge amount relative to the operation amount of a Means for decreasing NOx for the engine (1) is calculated on the basis of the operation state of the engine (1); the NOx reduction amount relative to the spray amount of a reduction agent is calculated on the basis of the operation state of the engine (1); and a combination of the reduction agent spray amount and the operation amount of the Means for decreasing NOx is calculated such that the difference between the NOx discharge amount and the NOx reduction amount is no more than the NOx limit.

## Description

### Technical Field

The present invention relates to an exhaust purification system and a ship having the exhaust purification system.

### Background Art

Conventionally, an exhaust purification device is known in which a selective reducing type NOx catalyst is arranged inside an exhaust pipe and NOx is reduced into nitrogen and water for decreasing NOx (nitrogen oxide) included in exhaust gas discharged from an internal combustion engine. A urea solution is supplied to exhaust gas from a urea solution injection nozzle arranged inside the exhaust pipe, and ammonia is generated from the urea solution by heat of the exhaust gas so as to reduce NOx into nitrogen and water.

A an engine having the exhaust purification device, an exhaust purification system (control device of the engine) is known which reduces NOx with a reduction agent and delays fuel injection timing of the engine so as to suppress the generation of NOx. A rate of suppression of the generation of NOx by delaying the fuel injection timing and a rate of reduction of NOx with the reduction agent are determined based on a unit price of the fuel and a unit price of the reduction agent. When the unit price of the fuel or the unit price of the reduction agent is higher than an assumption unit price, the control device of the engine controls a delay amount of the injection timing or a supply amount of the reduction agent so as to make a running cost lower than a set value. For example, an art of the Patent Literature 1 is so.

However, the control device of the engine described in the Patent Literature 1 determines the fuel injection timing and the injection amount of the reduction agent based on the running cost. Accordingly, when the unit price of the fuel and the unit price of the reduction agent are high, the control device of the engine may suppress the delay amount of the injection timing and the injection amount of the reduction agent so as to suppress a decrease amount of NOx.

### Prior Art Reference

### Patent Literature

Patent Literature 1: the Japanese Patent Laid Open Gazette 2007-255303

### Disclosure of Invention

### Problems to Be Solved by the Invention

The present invention is provided for solving the above problem, and the purpose of the present invention is to provide an exhaust purification system and a ship having the exhaust purification system which can select a combination of means for decreasing NOx corresponding to an operation state of an engine and a state of the exhaust purification system while decreasing a NOx discharge amount to be not more than a NOx limit.

### Means for Solving the Problems

The problems to be solved by the present invention have been described above, and subsequently, the means of solving the problems will be described below.

According to the present invention, in an exhaust purification system in which a catalyst is provided inside an exhaust pipe of an engine, a NOx discharge amount with respect to an operation amount of a means for decreasing NOx of the engine is calculated based on an operation state of the engine, a NOx reduction amount with respect to an injection amount of a reduction agent is calculated based on the operation state of the engine, and a combination of the operation amount of the means for decreasing NOx and the injection amount of the reduction agent at which a difference between the NOx discharge amount and the NOx reduction amount is not more than a NOx limit is calculated.

According to the present invention, among the combination of the operation amount of the means for decreasing NOx and the injection amount of the reduction agent, a combination which minimizes a sum of a cost of fuel with respect to the operation amount of the means for decreasing NOx calculated based on a unit price of the fuel and a cost of the reduction agent with respect to the injection amount of the reduction agent calculated based on a unit price of the reduction agent is calculated.

According to the present invention, a fuel injection timing angle is controlled as the means for decreasing NOx and the fuel injection timing angle is changed based on the operation state of the engine so as to calculate the cost of the fuel which is varied.

According to the present invention, a EGR device which makes a part of exhaust gas flow back to an intake pipe as EGR gas is provided further as the means for decreasing NOx, and an opening degree of the EGR valve is changed based on the operation state of the engine so as to calculate the cost of the fuel which is varied.

According to the present invention, among the combination of the operation amount of the means for decreasing NOx and the injection amount of the reduction agent, a combination which minimizes a fuel consumption amount and a combination which minimizes the injection amount of the reduction agent are calculated.

According to the present invention, a fuel injection timing angle is controlled as the means for decreasing NOx and the fuel injection timing angle is changed based on the operation state of the engine so as to calculate the cost of the fuel which is varied.

According to the present invention, a EGR device which makes a part of exhaust gas flow back to an intake pipe as EGR gas is provided further as the means for decreasing NOx, and an opening degree of the EGR valve is changed based on the operation state of the engine so as to calculate the cost of the fuel which is varied.

According to the present invention, an intake throttle valve is provided further in the intake pipe as the means for decreasing NOx, and an opening degree of the intake throttle valve is changed based on the operation state of the engine so as to calculate the cost of the fuel which is varied.

According to the present invention, a GPS receiver is provided further, and the NOx limit is switched based on position information calculated from a received GPS signal.

The present invention is a ship having the above exhaust purification system.

### Effect of the Invention

The present invention brings the following effects.

According to the present invention, the combination of the means for decreasing NOx can be selected corresponding to the operation state of the engine and the state of the exhaust purification system while decreasing the NOx discharge amount to be not more than the NOx limit.

According to the present invention, based on the operation state of the engine, the unit price of the reduction agent and the unit price of the fuel, the rate of the means for decreasing NOx is calculated. Accordingly, the running cost of the engine and the exhaust purification system can be minimized while decreasing the final NOx discharge amount discharged to the outside air to be not more than the NOx limit.

According to the present invention, based on the operation state of the engine, the unit price of the urea solution and the unit price of the fuel, the rate of the delay amount of the fuel injection valve and the urea solution injection amount of the urea solution which are the means for decreasing NOx is calculated. Accordingly, the running cost of the engine and the exhaust purification system can be minimized while decreasing the final NOx discharge amount discharged to the outside air to be not more than the NOx limit.

According to the present invention, based on the operation state of the engine, the unit price of the urea solution and the unit price of the fuel, the rate of the EGR valve opening degree of the EGR device and the urea solution injection amount of the urea solution which are the means for decreasing NOx is calculated. Accordingly, the running cost of the engine and the exhaust purification system can be minimized while decreasing the final NOx discharge amount discharged to the outside air to be not more than the NOx limit.

According to the present invention, the NOx limit corresponding to the arrangement of the engine is set. Accordingly, the running cost of the engine and the exhaust purification system can be minimized while decreasing the final NOx discharge amount discharged to the outside air to be not more than the NOx limit.

According to the present invention, the combination whose configuration rate of the means for decreasing NOx is different is calculated. Accordingly, the running cost of the engine and the exhaust purification system can be minimized while decreasing the final NOx discharge amount discharged to the outside air to be not more than the NOx limit.

According to the present invention, the combination whose configuration rate of the delay amount of the fuel injection valve and the urea solution injection amount of the urea solution which are the means for decreasing NOx is different is calculated. Accordingly, the running cost of the engine and the exhaust purification system can be minimized while decreasing the final NOx discharge amount discharged to the outside air to be not more than the NOx limit.

According to the present invention, the combination whose configuration rate of the EGR valve opening degree of the EGR device and the urea solution injection amount of the urea solution which are the means for decreasing NOx is different is calculated. Accordingly, the running cost of the engine and the exhaust purification system can be minimized while decreasing the final NOx discharge amount discharged to the outside air to be not more than the NOx limit.

According to the present invention, the combination whose configuration rate of the throttle valve opening degree of the intake throttle valve and the urea solution injection amount of the urea solution which are the means for decreasing NOx is different is calculated. Accordingly, the running cost of the engine and the exhaust purification system can be minimized while decreasing the final NOx discharge amount discharged to the outside air to be not more than the NOx limit.

According to the present invention, the NOx limit corresponding to the arrangement of the engine is set. Accordingly, the running cost of the engine and the exhaust purification system can be minimized while decreasing the final NOx discharge amount discharged to the outside air to be not more than the NOx limit. The running cost of the engine and the exhaust purification system can be minimized while decreasing the final NOx discharge amount discharged to the outside air to be not more than the NOx limit.

According to the present invention, regardless of the NOx limit set with respect to an ocean space in which the ship sails, the combination whose configuration rate of the means for decreasing NOx is different is calculated. Accordingly, the running cost of the engine and the exhaust purification system can be minimized while decreasing the final NOx discharge amount discharged to the outside air to be not more than the NOx limit. The running cost of the engine and the exhaust purification system can be minimized while decreasing the final NOx discharge amount discharged to the outside air to be not more than the NOx limit.

### Brief Description of Drawings

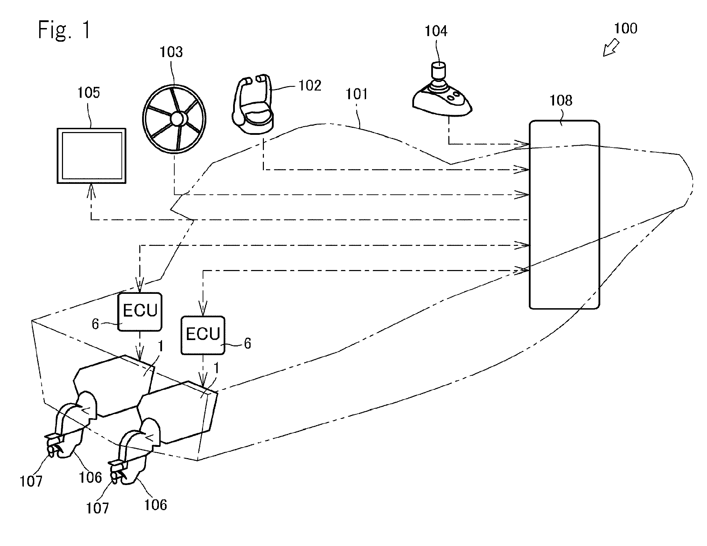

[Fig. 1] Fig. 1 is a schematic drawing of a ship having an exhaust purification system according to the present invention.

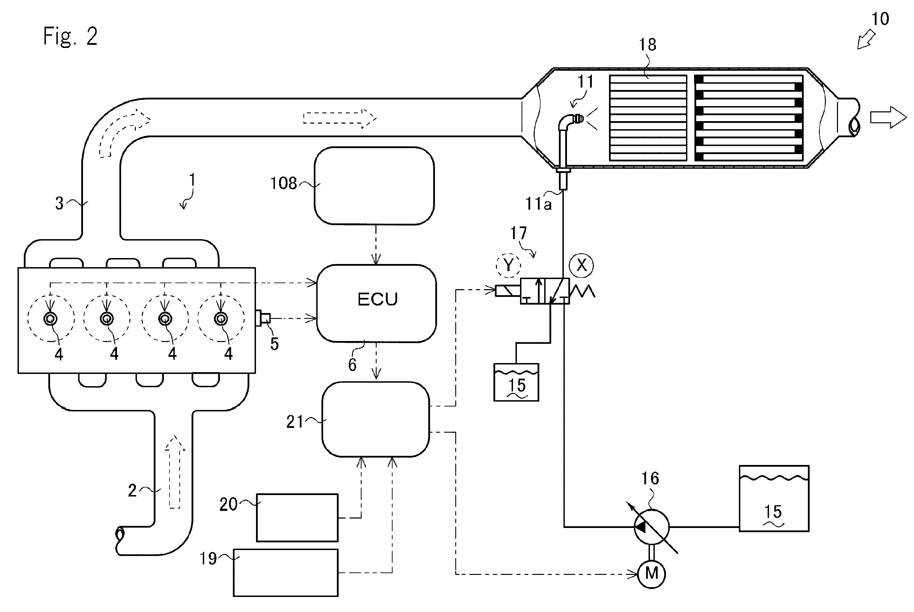

[Fig. 2] Fig. 2 is a schematic drawing of the exhaust purification system according to first and fourth embodiments of the present invention.

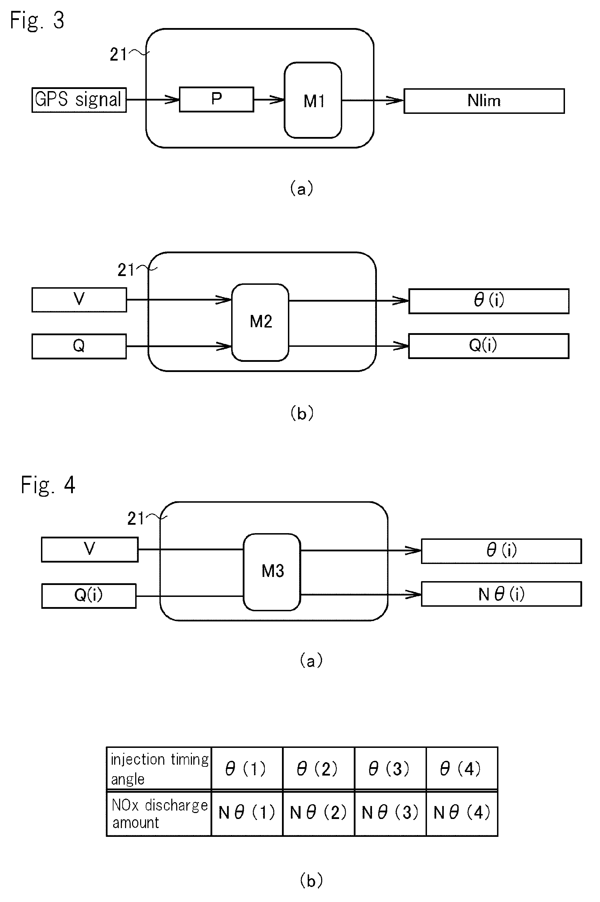

[Fig. 3] Fig. 3(a) is a schematic drawing of a mode for calculating a NOx limit value in a control device of the exhaust purification system according to the first and fourth embodiments of the present invention. Fig. 3(b) is a schematic drawing of a mode for calculating an injection amount thereof.
[Fig. 4] Fig. 4(a) is a schematic drawing of a mode for calculating a NOx discharge amount in the control device of the exhaust purification system according to the first and fourth embodiments of the present invention. Fig. 4(b) is a table of the NOx discharge amount calculated by the control device of the exhaust purification system according to the first and fourth embodiments of the present invention.

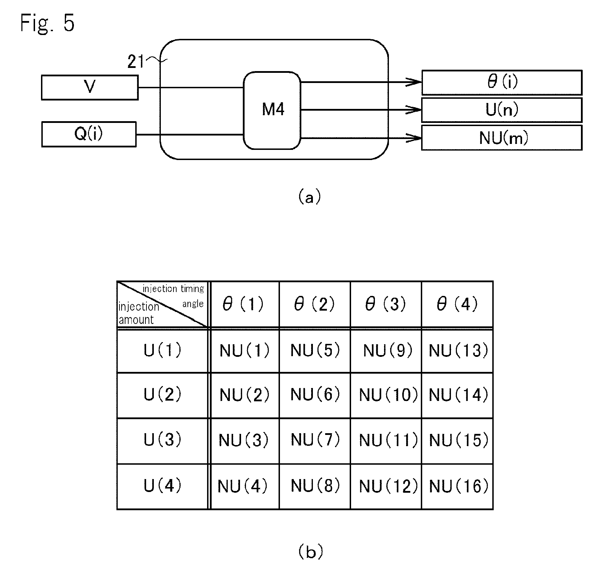

[Fig. 5] Fig. 5(a) is a schematic drawing of a mode for calculating a NOx reduction amount in the control device of the exhaust purification system according to the first and fourth embodiments of the present invention. Fig. 5(b) is a table of the NOx reduction amount calculated by the control device of the exhaust purification system according to the first and fourth embodiments of the present invention.

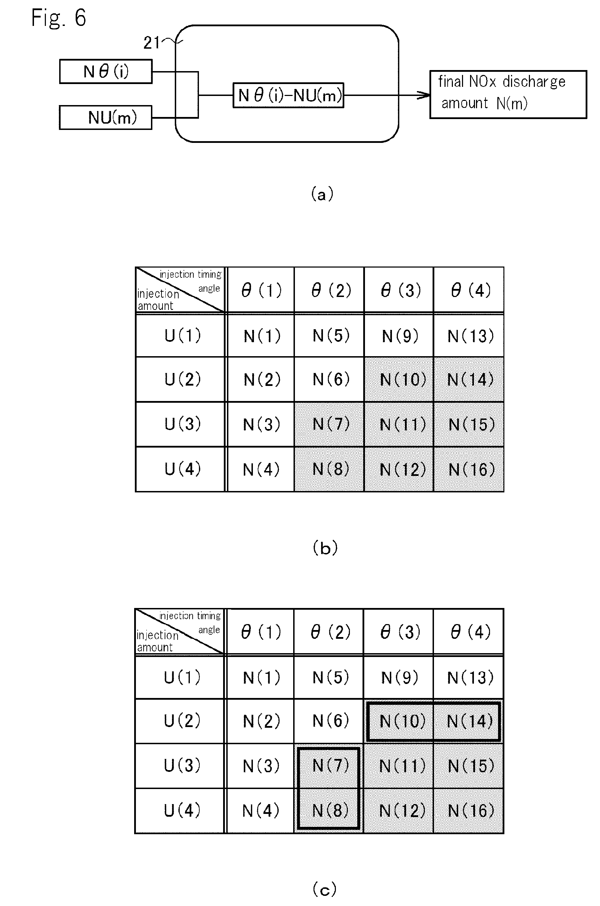

[Fig. 6] Fig. 6(a) is a schematic drawing of a mode for calculating a final NOx discharge amount in the control device of the exhaust purification system according to the first and fourth embodiments of the present invention. Fig. 6(b) is a table of the final NOx discharge amount calculated by the control device of the exhaust purification system according to the first and fourth embodiments of the present invention. Fig. 6(c) is a table of combination calculated by the control device of the fourth embodiment of the present invention.

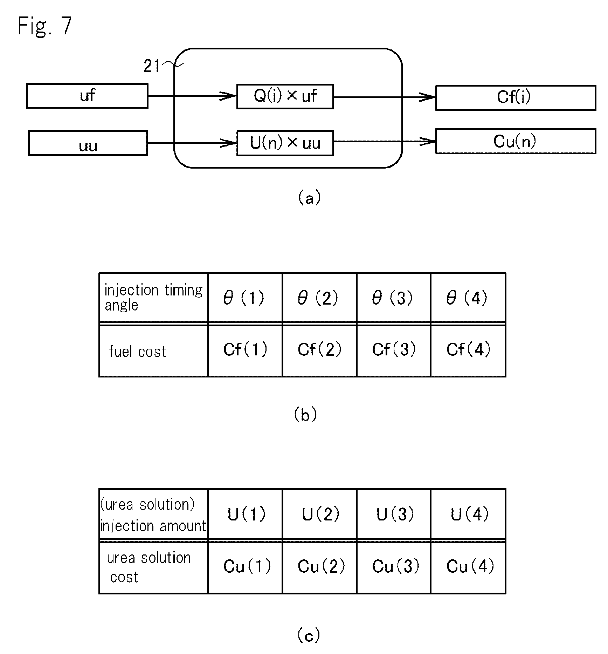

[Fig. 7] Fig. 7(a) is a mode for calculating costs of fuel and reducing agent in the control device of the exhaust purification system according to the first embodiment of the present invention. Fig. 7(b) is a table of the cost of the fuel calculated by the control device of the exhaust purification system according to the first embodiment of the present invention. Fig. 7(c) is a table of the cost of the reducing agent calculated by the control device of the exhaust purification system according to the first embodiment of the present invention.

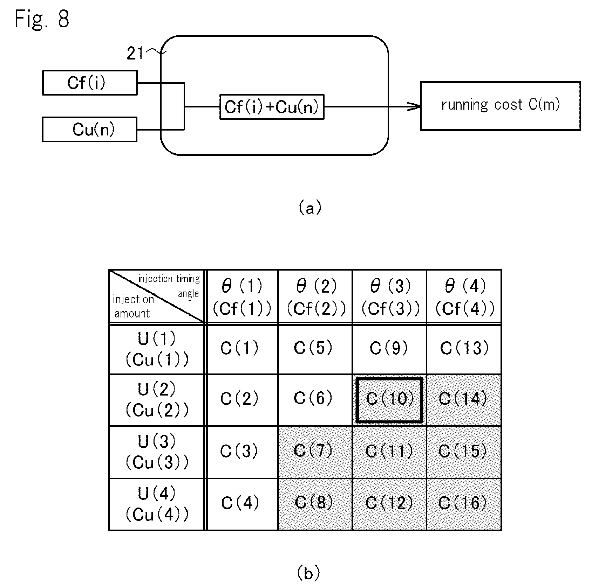

[Fig. 8] Fig. 8(a) is a mode for calculating a running cost in the control device of the exhaust purification system according to the first embodiment of the present invention. Fig. 8(b) is a table of the running cost calculated by the control device of the exhaust purification system according to the first embodiment of the present invention.

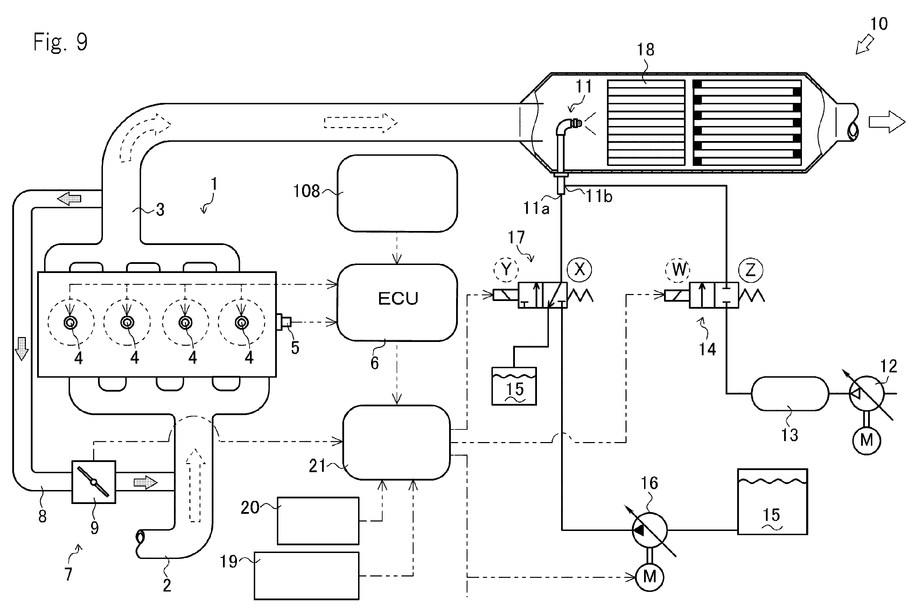

[Fig. 9] Fig. 9 is a schematic drawing of the exhaust purification system according to second and fifth embodiments of the present invention.

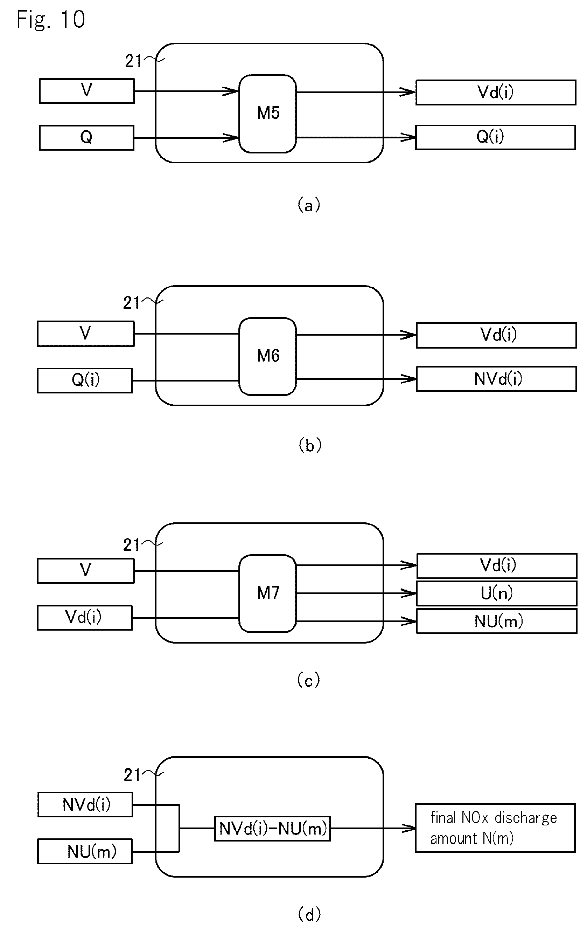

[Fig. 10] Fig. 10(a) is a schematic drawing of a mode for calculating an injection amount in the control device of the exhaust purification system according to the second and fifth embodiments of the present invention. Fig. 10(b) is a schematic drawing of a mode for calculating a NOx discharge amount in the control device of the exhaust purification system according to the second and fifth embodiments of the present invention. Fig. 10(c) is a schematic drawing of a mode for calculating a NOx reduction amount in the control device of the exhaust purification system according to the second and fifth embodiments of the present invention. Fig. 10(d) is a schematic drawing of a mode for calculating a final NOx discharge amount in the control device of the exhaust purification system according to the second embodiment of the present invention.

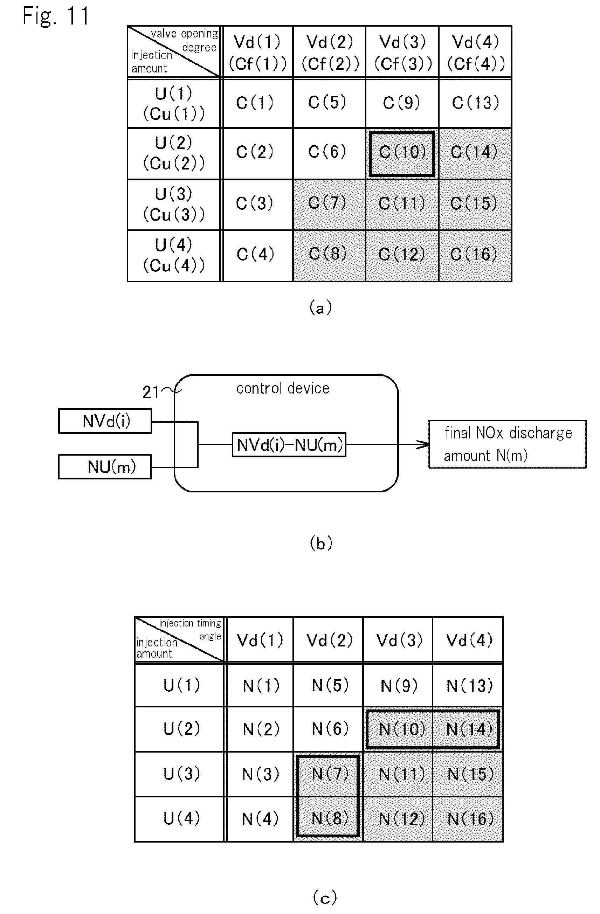

[Fig. 11] Fig. 11 (a) is a table of a running cost calculated by the control device of the exhaust purification system according to the second embodiment of the present invention. Fig. 11(b) is a schematic drawing of a mode for calculating a final NOx discharge amount in the control device of the exhaust purification system according to the fifth embodiment of the present invention. Fig. 11(c) is a table of combination calculated by the control device of the exhaust purification system according to the fifth embodiment of the present invention.

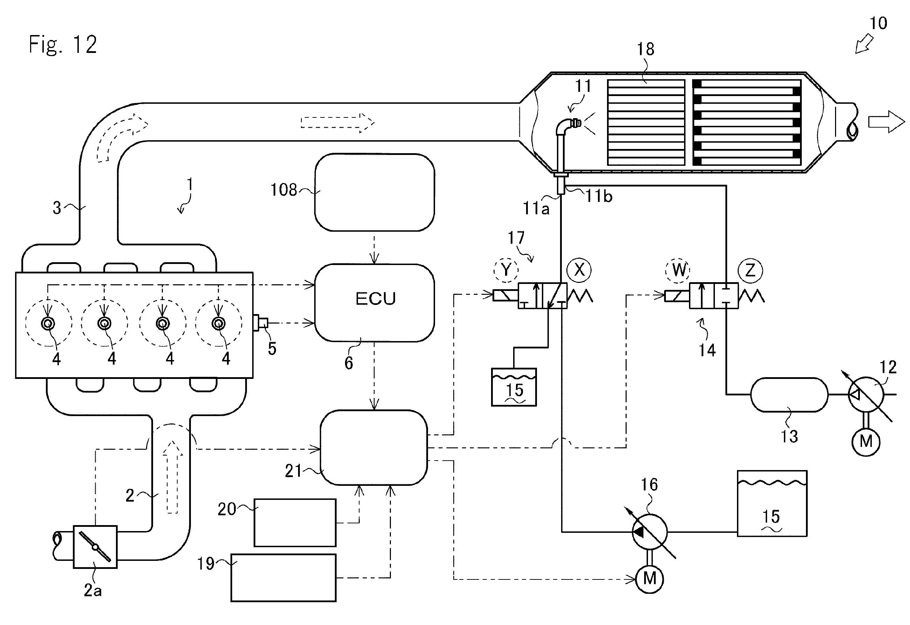

[Fig. 12] Fig. 12 is a schematic drawing of the exhaust purification system according to third and sixth embodiments of the present invention.

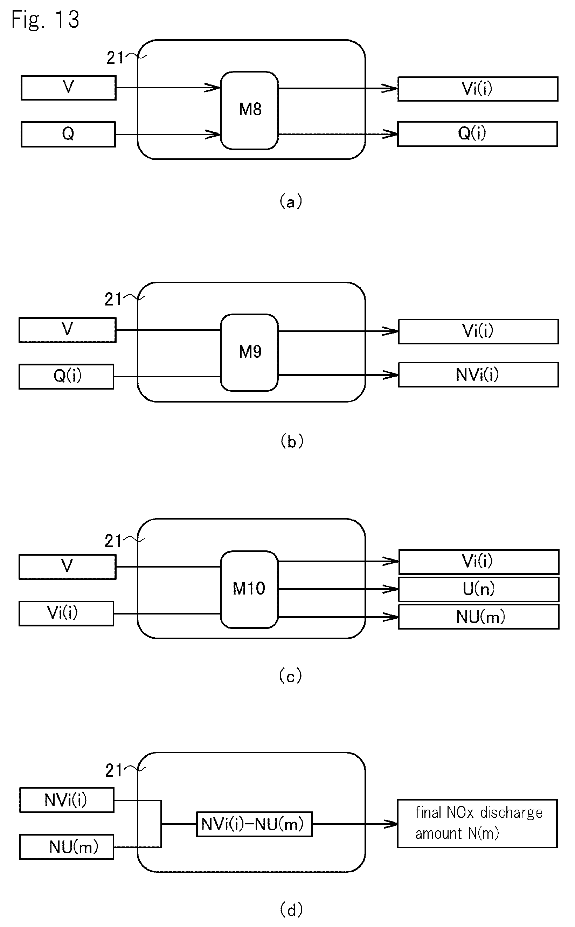

[Fig. 13] Fig. 13(a) is a schematic drawing of a mode for calculating an injection amount in the control device of the exhaust purification system according to the third and sixth embodiments of the present invention. Fig. 13(b) is a schematic drawing of a mode for calculating a NOx discharge amount in the control device of the exhaust purification system according to the third and sixth embodiments of the present invention. Fig. 13(c) is a schematic drawing of a mode for calculating a NOx reduction amount in the control device of the exhaust purification system according to the third and sixth embodiments of the present invention. Fig. 13(d) is a schematic drawing of a mode for calculating a final NOx discharge amount in the control device of the exhaust purification system according to the third embodiment of the present invention.

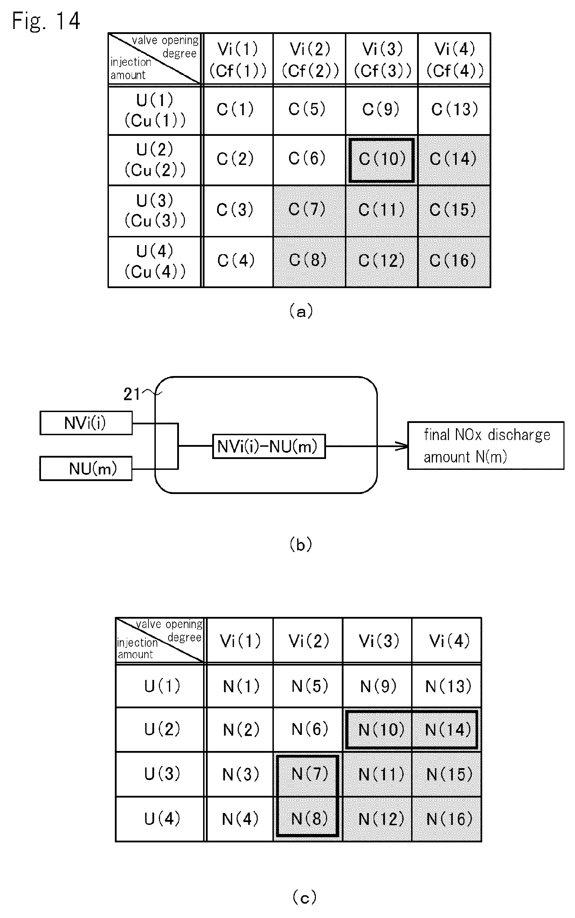

[Fig. 14] Fig. 14(a) is a table of a running cost calculated by the control device of the exhaust purification system according to the third embodiment of the present invention. Fig. 14(b) is a schematic drawing of a mode for calculating a final NOx discharge amount in the control device of the exhaust purification system according to the sixth embodiment of the present invention. Fig. 14(c) is a table of combination calculated by the control device of the exhaust purification system according to the sixth embodiment of the present invention.

### Detailed Description of the Invention

Firstly, entire outline and configuration of a ship 100 which is an embodiment of a ship having an exhaust purification system 10 according to the present invention is explained referring to Fig. 1. The ship 100 of Fig. 1 is a so-called biaxial propulsion ship. However, number of propulsion axes is not limited thereto and a plurality of axes may be provided.

As shown in Fig. 1, in the ship 100, an operation state of engines 1 is controlled corresponding to operation of an acceleration lever 102, and the ship 100 is propelled by propellers 107 of outdrive devices 106. A route of the ship 100 is changed by changing a direction of the outdrive device 106 by a steering wheel 103 and a joystick lever 104. In the ship 100, a hull 101 has the two engines 1, the two outdrive devices 106, and a ship navigation control device 108. Though the ship 100 has the two engines 1 in this embodiment, the present invention is not limited thereto. A drive device is not limited to the outdrive device 106 of this embodiment and may alternatively be a device in which a propeller is driven directly or indirectly by the engine or a device of POD type.

The ship navigation control device 108 controls the engine 1 and the outdrive device 106 based on detection signals from the acceleration lever 102, the steering wheel 103, the joystick lever 104 and the like. The ship navigation control device 108 may be configured to be able to perform so-called automatic navigation that a route is calculated from a position of the ship and a set destination based on information from a global positioning system (GPS) and steering is performed automatically.

In the ship navigation control device 108, various programs and data for controlling the engine 1 and the outdrive device 106 are stored. An ECU 6 may be configured by connecting a CPU, a ROM, a RAM, a HDD and the like with a bus, or may alternatively be a one-chip LSI or the like.

The ship navigation control device 108 is connected to the acceleration lever 102, the steering wheel 103, the joystick lever 104 and the like and can obtain control signals from the acceleration lever 102, the steering wheel 103, the joystick lever 104 and the like.

The ship navigation control device 108 is connected to the ECU 6 of each of the engines 1 and can obtain the operation state of the engines 1 and various signals.

The ship navigation control device 108 is connected to a monitor 105 and can display operation state of the steering wheel 103, the joystick lever 104 and the like, state of the engines 1 based on various signals from the ECUs 6, a calculated log speed of the ship 100, and the like on the monitor 105.

Next, the exhaust purification system 10 according to a first embodiment of the present invention is explained referring to Figs. 2 to 8. In this embodiment, an "upstream side" means an upstream side in a flow direction of fluid, and a "downstream side" means a downstream side in the flow direction of the fluid.

Firstly, the engine 1 provided in the exhaust purification system 10 according to a first embodiment of the present invention is explained.

As shown in Fig. 2, the engine 1 is a diesel engine 1 which uses light oil or heavy oil as fuel, and is an in-line four-cylinder engine which has four cylinders in this embodiment. The engine 1 generates power by mixing and burning outside air supplied via an intake pipe 2 and fuel supplied from fuel injection valves 4, and transmits the power to the outdrive device 106 (see Fig. 1). The engine 1 discharges exhaust gas generated by combustion of the fuel to the outside via an exhaust pipe 3. The engine 1 has a rotation speed sensor 5 detecting a rotation speed V of an output shaft. The engine 1 is not limited to the diesel engine.

The ECU 6 controls the engine 1. Various programs are stored in the ECU 6 so as to control the engine 1. The ECU 6 may be configured by connecting a CPU, a ROM, a RAM, a HDD and the like with a bus, or may alternatively be a one-chip LSI or the like.

The ECU 6 is connected to the fuel injection valves 4 and can control the fuel injection valves 4.

The ECU 6 is connected to the rotation speed sensor 5 and can obtain the rotation speed V detected by the rotation speed sensor 5.

Next, the exhaust purification system 10 according to the first embodiment of the present invention is explained. The exhaust purification system 10 according to the present invention is mainly mounted on a small ship such as a pleasure boat, but can be used for not only the small ship but also a large ship such as a tanker ship.

The exhaust purification system 10 decreases NOx discharged from the engine 1. The exhaust purification system 10 has a urea solution injection nozzle 11, a urea solution supply pump 16, a switching valve 17, a NOx catalyst 18, a GPS receiver 19, an input device 20, a control device 21 and the like. Though the exhaust purification system 10 is air-less type in this embodiment, the exhaust purification system 10 is not limited thereto.

The urea solution injection nozzle 11 supplies urea solution which is a reducing agent to an inside of the exhaust pipe 3. The urea solution injection nozzle 11 is configured by a cylindrical member and one of sides (downstream side) thereof is inserted into the exhaust pipe 3.

The urea solution supply pump 16 supplies urea solution. The urea solution supply pump 16 supplies urea solution in a urea solution tank 15 to the urea solution injection nozzle 11 at a predetermined flow rate. In this embodiment, the urea solution supply pump 16 is not limited especially and may be a pump which can supply urea solution at the predetermined flow rate.

The switching valve 17 switches flow passages of urea solution. The switching valve 17 is configured by an electromagnetic valve and connected to the control device 21. By sliding a spool, the switching valve 17 can be switched to a position X and a position Y.

When the switching valve 17 is at the position X, urea solution is not supplied to the urea solution injection nozzle 11. When the switching valve 17 is at the position Y, urea solution is supplied to the urea solution injection nozzle 11.

A unit price uf of fuel and a unit price uu of urea solution are inputted into the input device 20. The input device 20 is connected to the control device 21. An operator can input an optional unit price into the input device 20.

The GPS receiver 19 receives a GPS signal which is information from a global positioning system (GPS). The GPS receiver 19 is connected to the control device 21.

The control device 21 controls the fuel injection valves 4 via the urea solution supply pump 16, the switching valve 17 and the ECU 6. In the control device 21, various programs for controlling the urea solution supply pump 16, the switching valve 17 and the fuel injection valves 4 and various programs and data for calculating its position P based on the GPS signal are stored. The control device 21 may be configured by connecting a CPU, a ROM, a RAM, a HDD and the like with a bus, or may alternatively be a one-chip LSI or the like. The control device 21 may be configured integrally with the ECU 6 controlling the engine 1.

In the control device 21, restriction information about a NOx limit Nlim for each of ocean spaces is stored. In the control device 21, a NOx limit map M1 for shifting to the NOx limit Nlim in the area concerned from the restriction information and the position P calculated based on the GPS signal obtained from the GPS receiver 19, an injection amount-by-injection timing angle map M2 for calculating each injection amount Q(i) required for maintaining engine output of standard injection timing angle θs at each injection timing angle θ(i) of the fuel injection valve 4 from the obtained rotation speed V and an injection amount Q of fuel, a NOx discharge amount-by-injection timing angle map M3 for calculating a NOx discharge amount Nθ(i) discharged from the engine 1 at each injection timing angle θ(i) from the obtained rotation speed V and each calculated injection amount Q(i), and a NOx reduction amount map M4 for calculating a NOx reduction amount NU(m) reduced at each urea solution injection amount U(n) of each injection timing angle θ(i) from the obtained rotation speed V and each calculated injection amount Q(i) are stored (see Figs. 3, 4(a) and 5(a)).

The control device 21 is connected to the urea solution supply pump 16 and can control the urea solution supply pump 16.

The control device 21 is connected to the switching valve 17 and can control the switching valve 17.

The control device 21 is connected to the GPS receiver 19 and can obtain the GPS signal received by the GPS receiver 19.

The control device 21 is connected to the input device 20 and can obtain the unit price uf of fuel and the unit price uu of urea solution inputted via the input device 20.

The control device 21 is connected to the ECU 6, and can obtain various kinds of information about the engine 1 from the ECU 6 and transmit a control signal of the engine 1 to the ECU 6. Concretely, the control device 21 can obtain the rotation speed V of the engine 1 and the standard injection timing angle θs, the injection amount Q, the injection amount Q(i) and the injection amount Q(i) of the fuel injection valve 4 via the ECU 6, and can transmit a signal for controlling the fuel injection valve 4 to the ECU 6.

The control device 21 can calculate its position P from the obtained GPS signal and can shift to the NOx limit Nlim in the area from the NOx limit map M1 based on the calculated position P.

The control device 21 can calculate each injection amount Q(i) required for maintaining engine output at each injection timing angle θ(i) of the fuel injection valve 4 set previously from the injection amount-by-injection timing angle map M2 based on the obtained rotation speed V and the obtained injection amount Q.

The control device 21 can calculate the NOx discharge amount Nθ(i) discharged from the engine 1 at each injection timing angle θ(i) from the NOx discharge amount-by-injection timing angle map M3 based on the obtained rotation speed V and the obtained injection amount Q.

The control device 21 can calculate the NOx reduction amount NU(m) reduced at each urea solution injection amount U(n) set previously from the NOx reduction amount map M4 based on the obtained rotation speed V and each injection amount Q(i).

The control device 21 can calculate a final NOx discharge amount N(m) which is a difference between the calculated NOx discharge amount Nθ(i) and the calculated NOx reduction amount NU(m).

The control device 21 can calculate a fuel cost Cf(i) at the injection amount Q(i) and a urea solution cost Cu(n) at the urea solution injection amount U(n) from the obtained unit price uf of fuel and the obtained unit price uu of urea solution.

The control device 21 can calculate a running cost C(m) which is a sum of the calculated fuel cost Cf(i) and the calculated urea solution cost Cu(n).

The NOx catalyst 18 promotes reduction reaction of NOx. The NOx catalyst 18 is arranged inside the exhaust pipe 3 and downstream the urea solution injection nozzle 11. The NOx catalyst 18 is configured honeycomb-like and promote reaction that ammonia generated by heat-hydrolyzing the urea solution reduces NOx into nitrogen and water.

An operation mode of the urea solution injection nozzle 11 is explained referring to Fig. 2.

As shown in Fig. 2, when supply (injection) of the urea solution to the inside of the exhaust pipe 3 is started, the control device 21 shifts the switching valve 17 to the position Y so that the urea solution is supplied to a urea solution supply port 11 a of the urea solution injection nozzle 11 and injected from an injection port of the urea solution injection nozzle 11.

As shown in Fig. 2, when the supply (injection) of the urea solution to the inside of the exhaust pipe 3 is stopped, the control device 21 shifts the switching valve 17 to the position X so that the supply of the urea solution to the urea solution supply port 11a of the urea solution injection nozzle 11 is stopped.

A control mode that the running cost of the engines 1 and the exhaust purification system 10 is minimized by the control device 21 of the exhaust purification system 10 according to the first embodiment of the present invention is explained referring to Figs. 3 to 8.

Firstly, as shown in Fig. 3(a), the control device 21 calculates its position P based on the GPS signal obtained from the GPS receiver 19. Then, the control device 21 shifts to the NOx limit Nlim in the area from the NOx limit map M1 based on the restriction information and the calculated position P.

Next, as shown in Fig. 3(b), the control device 21 calculates each injection amount Q(i) required for maintaining engine output of the standard injection timing angle θs at each injection timing angle θ(i) from the injection amount-by-injection timing angle map M2 based on the rotation speed V and the injection amount Q obtained from the ECU 6.

Next, as shown in Fig. 4(a), the control device 21 calculates the NOx discharge amount Nθ(i) discharged from the engine 1 at each injection timing angle θ(i) from the NOx discharge amount-by-injection timing angle map M3 based on the rotation speed V obtained from the ECU 6 and each calculated injection amount Q(i).

Concretely, as shown in Fig. 4(b), in the case of the rotation speed V, the control device 21 calculates a NOx discharge amount Nθ(1) at an injection timing angle θ(1), a NOx discharge amount Nθ(2) at an injection timing angle θ(2), a NOx discharge amount Nθ(3) at an injection timing angle θ(3), and a NOx discharge amount Nθ(4) at an injection timing angle θ(4).

Next, as shown in Fig. 5(a), the control device 21 calculates the NOx reduction amount NU(m) reduced in the case in which the urea solution injection amount is each urea solution injection amount U(n) at each injection timing angle θ(i) from the NOx reduction amount map M4 based on the rotation speed V obtained from the ECU 6 and each calculated injection amount Q(i).

Concretely, as shown in Fig. 5(b), in the case of the rotation speed V, from the NOx reduction amount map M4, the control device 21 calculates a NOx reduction amount NU(1) to a NOx reduction amount NU(4) which are reduced from a urea solution injection amount U(1) to a urea solution injection amount U(4), a NOx reduction amount NU(8) from a NOx reduction amount NU(5) which is reduced at a urea solution injection timing angle θ(2), a NOx reduction amount NU(12) from a NOx reduction amount NU(9) which is reduced at a urea solution injection timing angle θ(3), and a NOx reduction amount NU(16) from a NOx reduction amount NU(13) which is reduced at a urea solution injection timing angle θ(4).

Next, as shown in Fig. 6(a), the control device 21 calculates the final NOx discharge amount N(m) which is the difference between each calculated NOx discharge amount Nθ(i) and each calculated NOx reduction amount NU(m). Then, the control device 21 calculates a combination of the injection timing angle θ(i) and the urea solution injection amount U(n) at which the calculated final NOx discharge amount N(m) is not more than the calculated NOx limit Nlim.

Concretely, as shown in Fig. 6(b), the control device 21 calculates a final NOx discharge amount N(4) from a final NOx discharge amount N(1) which is a difference between the NOx discharge amount Nθ(1) at the injection timing angle θ(1) (see Fig. 4(b)) and the NOx reduction amount NU(1) to the NOx reduction amount NU(4) at the urea solution injection amount U(1) to the urea solution injection amount U(4) (see Fig. 5(b)). Similarly, the control device 21 calculates a final NOx discharge amount N(8) from a final NOx discharge amount N(5) at the urea solution injection timing angle θ(2), a final NOx discharge amount N(12) from a final NOx discharge amount N(9) at the urea solution injection timing angle θ(3), and a final NOx discharge amount N(16) from a final NOx discharge amount N(13) at the urea solution injection timing angle θ(4). Then, the control device 21 calculates the combination of the injection timing angle θ(i) and the urea solution injection amount U(n) at which each of the final NOx discharge amounts N(1) to N(16) is not more than the NOx limit Nlim (see a shaded part in Fig. 6(b)).

Next, as shown in Fig. 7(a), the control device 21 calculates the fuel cost Cf(i) from the calculated injection amount Q(i) and the obtained unit price uf of fuel. In addition, the control device 21 also calculates the urea solution cost Cu(n) from the urea solution injection amount U(n) and the obtained unit price uu of urea solution.

Concretely, as shown in Fig. 7(b), the control device 21 calculates the control device 21 calculates a fuel cost Cf(1) from a calculated injection amount Q(1) at the injection timing angle θ(1) and the obtained unit price uf of fuel. Similarly, the control device 21 calculates a fuel cost Cf(2) at the injection timing angle θ(2), a fuel cost Cf(3) at the injection timing angle θ(3), and a fuel cost Cf(4) at the injection timing angle θ(4). Furthermore, as shown in Fig. 7(c), the control device 21 calculates a urea solution cost Cu(1) from a urea solution injection amount U(1) and the obtained unit price uu of urea solution. Similarly, the control device 21 calculates a urea solution cost Cu(2) at a urea solution injection amount U(2), a urea solution cost Cu(3) at a urea solution injection amount U(3), and a urea solution cost Cu(4) at a urea solution injection amount U(4).

Next, as shown in Fig. 8(a), the control device 21 calculates the running cost C(m) which is the sum of the fuel cost Cf(i) at the injection timing angle θ(i) and the injection amount Q(i) and the urea solution cost Cu(n) at the urea solution injection amount U(n). Furthermore, the control device 21 calculates a combination of the injection timing angle θ(i) and the urea solution injection amount U(n) at which the calculated final NOx discharge amount N(m) is not more than the NOx limit Nlim which minimizes the calculated running cost C(m).

Concretely, as shown in Fig. 8(b), the control device 21 calculates a running cost C(16) from a running cost C(1) which is a sum of one of the fuel costs Cf(1) to Cf(4) at the injection timing angles θ(1) to θ(4) (see Fig. 7(b)) and one of urea solution costs Cu(1) to Cu(4) at the urea solution injection amounts U(1) to U(4) at each of combinations of the injection timing angles (see Fig. 7(c)) from θ(1) to θ(4) and the urea solution injection amounts from U(1) to U(4).

Furthermore, among the running cost C(7), the running cost C(8), the running cost C(10), the running cost C(12), the running cost C(14) and the running cost C(16) at the combination of the injection timing angle θ(i) and the urea solution injection amount U(n) at which the final NOx discharge amount N(m) is not more than the NOx limit Nlim (see a shaded part in Fig. 8(b)), the control device 21 calculates a combination which minimizes the running cost C(m). In this embodiment, when the minimum running cost is the running cost C(10), the control device 21 calculates the combination of the injection timing angle θ(3) and the urea solution injection amount U(2).

The control device 21 transmits a control signal to the ECU 6 so as to make the injection timing angle be the injection timing angle θ(i) of the calculated combination. In addition, the control device 21 controls the switching valve 17 so as to make the urea solution injection amount be the urea solution injection amount U(n) (see Fig. 2). In this embodiment, the control device 21 transmits the control signal to the ECU 6 so as to make the injection timing angle be the injection timing angle θ(3) of the calculated combination. In addition, the control device 21 controls the switching valve 17 so as to make the urea solution injection amount be the urea solution injection amount U(2).

As the above, in the exhaust purification system 10 according to this embodiment in which the NOx catalyst is arranged inside the exhaust pipe 3 of the engine 1, the NOx discharge amount Nθ(i) with respect to the injection timing angle θ(i) which is an operation amount of the fuel injection valves 4 which is a means for decreasing NOx of the engine 1 is calculated based on the rotation speed V and the injection amount Q which are the operation state of the engine 1, the NOx reduction amount NU(m) with respect to the urea solution injection amount U(n) of the urea solution which is the reduction agent is calculated based on the rotation speed V and the injection amount Q(i), and among the combination of the injection timing angle θ(i) of the fuel injection valves 4 and the urea solution injection amount U(n) of the urea solution at which the final NOx discharge amount N(m) which is the difference between the NOx discharge amount Nθ(i) and the NOx reduction amount NU(m) is not more than the NOx limit Nlim, the combination which minimizes the running cost C(m) which is the sum of the fuel cost Cf(i) at the injection amount Q(i) with respect to the injection timing angle θ(i) of the fuel injection valves 4 calculated based on the unit price uf of the fuel and the urea solution cost Cu(n) which is the cost of the reduction agent with respect to the urea solution injection amount U(n) calculated based on the unit price uu of the urea solution is calculated.

According to the configuration, based on the rotation speed V and the injection amount Q(i) of the engine 1, the unit price uu of the urea solution, and the unit price uf of the fuel, a rate of the injection timing angle θ(i) of the fuel injection valves 4 and the urea solution injection amount U(n) of the urea solution which are means for decreasing NOx is calculated. Accordingly, the running cost C(m) of the engine 1 and the exhaust purification system 10 can be minimized while decreasing the final NOx discharge amount N(m) discharged to the outside air to be not more than the NOx limit Nlim.

The GPS receiver 19 is provided further, and the NOx limit Nlim is switched based on the position P calculated from the received GPS signal.

According to the configuration, the NOx limit Nlim corresponding to whereabouts of the engine 1 is set. Accordingly, the running cost C(m) of the engine 1 and the exhaust purification system 10 can be minimized while decreasing the final NOx discharge amount N(m) discharged to the outside air to be not more than the NOx limit Nlim.

Next, the exhaust purification system 10 according to a second embodiment of the present invention is explained referring to Figs. 9 to 11 (a). In below embodiment, a concrete explanation of parts similar to the embodiment explained already is omitted, and parts different to the embodiment explained already is explained mainly.

The engine 1 having in the exhaust purification system 10 according to the second embodiment of the present invention is explained.

As shown in Fig. 9, the engine 1 further has an EGR device 7. The EGR device 7 makes a part of exhaust gas flow back to intake air. The EGR device 7 has an EGR pipe 8, an EGR valve 9, a pressurized air supply pump 12, a pressurized air valve 14 and the like.

The EGR pipe 8 guides exhaust gas to the intake pipe 2. The EGR pipe 8 is provided so as to communicate the intake pipe 2 with the exhaust pipe 3. Accordingly, a part of the exhaust gas passing through the exhaust pipe 3 is guided via the EGR pipe 8 to the intake pipe 2 (see shaded arrows in Fig. 9). Namely, the part of the exhaust gas can flow back to the intake air as EGR gas (hereinafter, simply referred to as "EGR gas").

The EGR valve 9 limits a flow rate of the EGR gas passing through the EGR pipe 8. The EGR valve 9 is configured by an electromagnetic flow rate control valve. The EGR valve 9 is provided at a middle of the EGR pipe 8. The EGR valve 9 can obtain a signal from the control device 21 and change an EGR valve opening degree Vd(i) which is an opening degree of the EGR valve 9.

The pressurized air supply pump 12 supplies pressurized air to an air tank 13. The pressurized air supply pump 12 pressurizes (compresses) air and then supplies the air. The pressurized air supply pump 12 supplies air to the air tank 13 when pressure in the air tank 13 is lower than a predetermined pressure, and stops when the pressure in the air tank 13 reaches the predetermined pressure. In this embodiment, the pressurized air supply pump 12 is not limited especially and may be a member which can maintain the pressure in the air tank 13.

The pressurized air valve 14 opens and closes a flow passage of the pressurized air. The pressurized air valve 14 is configured by an electromagnetic valve and connected to the control device 21. By sliding a spool, the pressurized air valve 14 can be switched to a position Z and a position W.

When the pressurized air valve 14 is at the position Z, pressurized air is not supplied to the urea solution injection nozzle 11. When the pressurized air valve 14 is at the position W, pressurized air is supplied to the urea solution injection nozzle 11. Though the pressurized air valve 14 is configured by an electromagnetic valve, the pressurized air valve 14 is not limited thereto and may alternatively be held at the position Z or the position W by a driving motor or the like.

The control device 21 controls the fuel injection valves 4 via the pressurized air valve 14, the urea solution supply pump 16, the switching valve 17 and the ECU 6. Various programs for controlling the pressurized air valve 14, the urea solution supply pump 16, the switching valve 17, the fuel injection valves 4 and the like and programs and data for calculating the position P based on the GPS signal are stored in the control device 21.

In the control device 21, an injection amount-by-EGR valve opening degree map M5 for calculating the injection amount Q(i) required for maintaining the engine output at the time at which the EGR valve is fully closed at each EGR valve opening degree Vd(i) from the obtained rotation speed V and the injection amount Q, a NOx discharge amount-by-EGR valve opening degree map M6 for calculating a NOx discharge amount NVd(i) discharged by the engine at each EGR valve opening degree Vd(i) from the obtained rotation speed V and each calculated injection amount Q(i), a NOx reduction amount map M7 for calculating a NOx reduction amount NU(m) reduced at each urea solution injection amount U(n) from the obtained rotation speed V and the injection amount Q(i), and the like are stored (see Fig. 10).

The control device 21 is connected to the EGR valve 9 and can control the EGR valve 9.

The control device 21 is connected to the pressurized air valve 14 and can control the pressurized air valve 14.

The control device 21 can calculate the injection amount Q(i) required for maintaining the engine output at each EGR valve opening degree Vd(i) from the injection amount-by-EGR valve opening degree map M5 based on the obtained rotation speed V and the injection amount Q.

The control device 21 can calculate the NOx discharge amount NVd(i) discharged by the engine 1 at each EGR valve opening degree Vd(i) from the NOx discharge amount-by-EGR valve opening degree map M6 based on the obtained rotation speed V and each calculated injection amount Q(i).

The control device 21 can calculate the NOx reduction amount NU(m) reduced at each urea solution injection amount U(n) from the NOx reduction amount map M7 based on the obtained rotation speed V and each EGR valve opening degree Vd(i).

The control device 21 can calculate a final NOx discharge amount N(m) which is a difference between the calculated NOx discharge amount NVd(i) and the calculated NOx reduction amount NU(m).

An operation mode of the urea solution injection nozzle 11 is explained referring to Fig. 9.

As shown in Fig. 9, when supply (injection) of the urea solution to the inside of the exhaust pipe 3 is started, the control device 21 shifts the switching valve 17 to the position Y so that the urea solution is supplied to a urea solution supply port 11 a of the urea solution injection nozzle 11.

In this state, as shown in Fig. 9, the control device 21 shifts the pressurized air valve 14 to the position W so that pressurized air is supplied to a gas supply port 11b of the urea solution injection nozzle 11. As a result, the urea solution collides with the pressurized air and atomized inside the urea solution injection nozzle 11, and then injected via the injection port of the urea solution injection nozzle 11.

A control mode that the running cost of the exhaust purification system 10 is minimized by the control device 21 according to the second embodiment of the present invention is explained referring to Figs. 10 and 11(a).

Similarly to the above, as shown in Fig. 10(a), the control device 21 calculates each injection amount Q(i) from the injection amount-by-EGR valve opening degree map M5. Then, as shown in Fig. 10(b), the control device 21 calculates the NOx discharge amount NVd(i) discharged by the engine 1 at each EGR valve opening degree Vd(i) from the NOx discharge amount-by-EGR valve opening degree map M6. In addition, as shown in Fig. 10(c), the control device 21 calculates the NOx reduction amount NU(m), which is reduced when each urea solution injection amount U(n) is injected at each EGR valve opening degree Vd(i), from the NOx reduction amount map M7.

Next, as shown in Fig. 10(d), the control device 21 calculates the final NOx discharge amount N(m) which is the difference between each NOx discharge amount NVd(i) and each NOx reduction amount NU(m). Then, the control device 21 calculates a combination of the EGR valve opening degree Vd(i) and the urea solution injection amount U(n) at which the calculated final NOx discharge amount N(m) is not more than the calculated NOx limit Nlim (see a shaded part in Fig. 11(a)).

Next, as shown in Fig. 11 (a), among the calculated combination of the EGR valve opening degree Vd(i) and the urea solution injection amount U(n) at which the calculated final NOx discharge amount N(m) is not more than the calculated NOx limit Nlim, the control device 21 calculates a combination which minimizes the calculated running cost C(m). In this embodiment, when the minimum running cost is the running cost C(10), the control device 21 calculates a combination of a EGR valve opening degree Vd(3) and the urea solution injection amount U(2). In addition to the EGR valve opening degree Vd(i), the injection timing angle θ(i) of the fuel may be controlled.

The control device 21 transmits a control signal to the ECU 6 so as to realize the EGR valve opening degree Vd(i) of the calculated combination. In addition, the control device 21 controls the pressurized air valve 14 and the switching valve 17 so as to make the urea solution injection amount be the urea solution injection amount U(n) (see Fig. 9). In this embodiment, the control device 21 transmits the control signal to the ECU 6 so as to realize the injection timing angle be the EGR valve opening degree Vd(3) of the calculated combination. In addition, the control device 21 controls the pressurized air valve 14 and the switching valve 17 so as to make the urea solution injection amount be the urea solution injection amount U(2).

As the above, in the exhaust purification system 10 according to this embodiment, the EGR device 7 which makes a part of exhaust gas flow back to the intake pipe as EGR gas is provided further, and the EGR valve opening degree Vd(i) which is the opening degree of the EGR valve 9 is changed based on the rotation speed V and the injection amount Q(i) of the engine 1 so as to calculate the fuel cost Cf(i) which is varied.

According to the configuration, based on the rotation speed V and the injection amount Q(i) of the engine 1, the unit price uu of the urea solution, and the unit price uf of the fuel, a rate of the EGR valve opening degree Vd(i) of the EGR device 7 and the urea solution injection amount U(n) of the urea solution which are means for decreasing NOx is calculated. Accordingly, the running cost C(m) of the engine 1 and the exhaust purification system 10 can be minimized while decreasing the final NOx discharge amount N(m) discharged to the outside air to be not more than the NOx limit Nlim.

Next, the exhaust purification system 10 according to a third embodiment of the present invention is explained referring to Figs. 12 to 14(a). In below embodiment, a concrete explanation of parts similar to the embodiment explained already is omitted, and parts different to the embodiment explained already is explained mainly.

The engine 1 having the exhaust purification system 10 according to the third embodiment of the present invention is explained.

As shown in Fig. 12, the engine 1 further has an intake throttle valve 2a. The intake throttle valve 2a controls an intake flow rate of the engine 1. The intake throttle valve 2a is configured by an electromagnetic flow rate control valve. The intake throttle valve 2a is provided at a middle of the intake pipe 2. The intake throttle valve 2a can obtain a signal from the control device 21 and change a throttle valve opening degree Vi(i) which is an opening degree of the intake throttle valve 2a.

In the control device 21, an injection amount-by-throttle valve opening degree map M8 for calculating the injection amount Q(i) required for maintaining the engine output at the time at which the throttle valve is fully opened at each throttle valve opening degree Vi(i) from the obtained rotation speed V and the injection amount Q, a NOx discharge amount-by-throttle valve opening degree map M9 for calculating a NOx discharge amount NVi(i) discharged by the engine at each throttle valve opening degree Vi(i) from the obtained rotation speed V and each calculated injection amount Q(i), a NOx reduction amount map M10 for calculating a NOx reduction amount NU(m) reduced at each urea solution injection amount U(n) from the obtained rotation speed V and each throttle valve opening degree Vi(i), and the like are stored (see Fig. 13).

The control device 21 is connected to the intake throttle valve 2a and can control the intake throttle valve 2a.

The control device 21 can calculate the injection amount Q(i) required for maintaining the engine output at each throttle valve opening degree Vi(i) from the injection amount-by-throttle valve opening degree map M8 based on the obtained rotation speed V and the injection amount Q.

The control device 21 can calculate the NOx discharge amount NVi(i) discharged by the engine 1 at each throttle valve opening degree Vi(i) from the NOx discharge amount-by-throttle valve opening degree map M9 based on the obtained rotation speed V and each calculated injection amount Q(i).

The control device 21 can calculate the NOx reduction amount NU(m) reduced at each urea solution injection amount U(n) from the NOx reduction amount map M10 based on the obtained rotation speed V and each throttle valve opening degree Vi(i).

The control device 21 can calculate a final NOx discharge amount N(m) which is a difference between the calculated NOx discharge amount NVi(i) and the calculated NOx reduction amount NU(m).

A control mode that the running cost of the exhaust purification system 10 is minimized by the control device 21 according to the third embodiment of the present invention is explained referring to Figs. 13 and 14(a).

Similarly to the above, as shown in Fig. 13(a), the control device 21 calculates each injection amount Q(i) from the injection amount-by-throttle valve opening degree map M8. Then, as shown in Fig. 13(b), the control device 21 calculates the NOx discharge amount NVi(i) discharged by the engine 1 at each throttle valve opening degree Vi(i) from the NOx discharge amount-by-throttle valve opening degree map M9. In addition, as shown in Fig. 13(c), the control device 21 calculates the NOx reduction amount NU(m), which is reduced when each urea solution injection amount U(n) is injected at each throttle valve opening degree Vi(i), from the NOx reduction amount map M10.

Next, as shown in Fig. 13(d), the control device 21 calculates the final NOx discharge amount N(m) which is the difference between each NOx discharge amount NVi(i) and each NOx reduction amount NU(m). Then, the control device 21 calculates a combination of the throttle valve opening degree Vi(i) and the urea solution injection amount U(n) at which the calculated final NOx discharge amount N(m) is not more than the calculated NOx limit Nlim.

Next, as shown in Fig. 14(a), among the calculated combination of the throttle valve opening degree Vi(i) and the urea solution injection amount U(n) at which the calculated final NOx discharge amount N(m) is not more than the calculated NOx limit Nlim, the control device 21 calculates a combination which minimizes the calculated running cost C(m). In this embodiment, when the minimum running cost is the running cost C(10), the control device 21 calculates a combination of a throttle valve opening degree Vi(3) and the urea solution injection amount U(2). In addition to the throttle valve opening degree Vi(i), the injection timing angle θ(i) of the fuel and the EGR valve opening degree Vd(i) may be controlled by providing the EGR device.

As the above, in the exhaust purification system 10 according to this embodiment, the intake throttle valve 2a as a means for decreasing NOx is provided further in the intake pipe 2, and the throttle valve opening degree Vi(i) which is the opening degree of the intake throttle valve 2a is changed based on the rotation speed V and the injection amount Q(i) of the engine 1 so as to calculate the fuel cost Cf(i) which is varied.

According to the configuration, based on the rotation speed V and the injection amount Q(i) of the engine 1, the unit price uu of the urea solution, and the unit price uf of the fuel, a rate of the throttle valve opening degree Vi(i) of the intake throttle valve 2a and the urea solution injection amount U(n) of the urea solution which are means for decreasing NOx is calculated. Accordingly, the running cost C(m) of the engine 1 and the exhaust purification system 10 can be minimized while decreasing the final NOx discharge amount N(m) discharged to the outside air to be not more than the NOx limit Nlim.

The ship according to the present invention has the exhaust purification system 10 according to the first embodiment, the exhaust purification system 10 according to the second embodiment, or the exhaust purification system 10 according to the third embodiment.

According to the configuration, regardless of the NOx limit Nlim set with respect to an ocean space in which the ship 100 sails, based on the rotation speed V and the injection amount Q(i) of the engine 1, the unit price uu of the urea solution, and the unit price uf of the fuel, a rate of the injection timing angle θ(i) of the fuel injection valves 4 or the like and the urea solution injection amount U(n) of the urea solution which are means for decreasing NOx is calculated. Accordingly, the running cost C(m) of the engine 1 and the exhaust purification system 10 can be minimized while decreasing the final NOx discharge amount N(m) discharged to the outside air to be not more than the NOx limit Nlim.

Next, the exhaust purification system 10 according to a fourth embodiment of the present invention is explained referring to Figs. 2 to 6(c). An explanation of parts of the fourth embodiment similar to the first embodiment is omitted, and parts different to the first embodiment is explained.

The control device 21 is connected to the input device 20 and can obtain an operation mode of the exhaust purification system 10 inputted via the input device 20.

The control device 21 can calculate the injection timing angle θ(i) and the urea solution injection amount U(n) based on the obtained operation mode of the exhaust purification system 10.

A control mode for calculating a configuration rate of the means for decreasing NOx of the engine 1 and the exhaust purification system 10 by the control device 21 of the exhaust purification system 10 according to a fourth embodiment of the present invention is explained referring to Figs. 3 to 6.

Among the combination of the injection timing angle θ(i) and the urea solution injection amount U(n) at which the final NOx discharge amount N(m) is not more than the NOx limit Nlim, the control device 21 calculates a combination of the injection timing angle θ(i) and the urea solution injection amount U(n) which minimizes the injection amount Q(i). Furthermore, among the combination of the injection timing angle θ(i) and the urea solution injection amount U(n) at which the final NOx discharge amount N(m) is not more than the NOx limit Nlim, the control device 21 calculates a combination of the injection timing angle θ(i) and the urea solution injection amount U(n) at which the urea solution injection amount U(n) is minimized. Then, the control device 21 calculates a combination of the injection timing angle θ(i) and the urea solution injection amount U(n) based on the operation mode obtained from the input device.

Concretely, as shown in Fig. 6(c), among a final NOx discharge amount N(7), a final NOx discharge amount N(8), a final NOx discharge amount N(10) to a final NOx discharge amount N(12), a final NOx discharge amount N(14) and a final NOx discharge amount N(16), the combination which minimizes the injection amount Q(i) and the combination which minimizes the urea solution injection amount U(n) are calculated.

In this embodiment, when the injection amount Q(2) at the final NOx discharge amount N(7) and the final NOx discharge amount N(8) among the final NOx discharge amount N(m) which is not more than the NOx limit Nlim is the minimum injection amount, the control device 21 calculates a combination of the injection timing angle θ(2) and the urea solution injection amount U(3) and a combination of the injection timing angle θ(2) and the urea solution injection amount U(4). Furthermore, when the urea solution injection amount U(2) at the final NOx discharge amount N(10) and the final NOx discharge amount N(14) among the final NOx discharge amount N(m) which is not more than the NOx limit Nlim is the minimum urea solution injection amount, the control device 21 calculates a combination of the injection timing angle θ(3) and the urea solution injection amount U(2) and a combination of the injection timing angle θ(4) and the urea solution injection amount U(2).

When the operation mode of the exhaust purification system 10 inputted via the input device 20 is a fuel consumption decrease mode, among the combination of the injection timing angle θ(2) and the urea solution injection amount U(3) and the combination of the injection timing angle θ(2) and the urea solution injection amount U(4) which are the combination of the minimum injection amount Q(2) for suppressing fuel consumption, the control device 21 calculates the combination of the injection timing angle θ(2) and the urea solution injection amount U(3) which minimizes the urea solution injection amount U(n). Namely, the control device 21 suppresses urea solution consumption while minimizing the fuel consumption.

When the operation mode of the exhaust purification system 10 is a reduction agent consumption decrease mode, among the combination of the injection timing angle θ(3) and the urea solution injection amount U(2) and the combination of the injection timing angle θ(4) and the urea solution injection amount U(2) which are the combination of the minimum urea solution injection amount U(2) for suppressing the urea solution consumption, the control device 21 calculates the combination of the injection timing angle θ(3) and the urea solution injection amount U(2) which minimizes the injection amount Q(i). Namely, the control device 21 suppresses the fuel consumption while minimizing the urea solution consumption.

The control device 21 transmits a control signal to the ECU 6 so as to make the fuel injection timing angle be the injection timing angle θ(i) of the calculated combination. In addition, the control device 21 controls the pressurized air valve 14 and the switching valve 17 so as to make the urea solution injection amount be the urea solution injection amount U(n) (see Fig. 2).

Concretely, when the operation mode of the exhaust purification system 10 is the fuel consumption decrease mode, the control device 21 transmits a control signal to the ECU 6 so as to make the fuel injection timing angle be the injection timing angle θ(2) of the calculated combination. In addition, the control device 21 controls the pressurized air valve 14 and the switching valve 17 so as to make the urea solution injection amount be the urea solution injection amount U(3). Similarly, when the operation mode of the exhaust purification system 10 is the urea solution consumption decrease mode, the control device 21 transmits a control signal to the ECU 6 so as to make the fuel injection timing angle be the injection timing angle θ(3) of the calculated combination. In addition, the control device 21 controls the pressurized air valve 14 and the switching valve 17 so as to make the urea solution injection amount be the urea solution injection amount U(2).

As the above, in the exhaust purification system 10 of the engine 1 according to this embodiment, the reduction agent is provided in the exhaust pipe 3 of the engine 1, the NOx discharge amount Nθ(i) with respect to the injection timing angle θ(i) which is an operation amount of the fuel injection valves 4 which is a means for decreasing NOx of the engine 1 is calculated based on the rotation speed V and the injection amount Q which are the operation state of the engine 1, the NOx reduction amount NU(m) with respect to the urea solution injection amount U(n) of the urea solution which is the reduction agent is calculated based on the rotation speed V and the injection amount Q(i), and among the combination of the injection timing angle θ(i) of the fuel injection valves 4 and the urea solution injection amount U(n) of the urea solution at which the final NOx discharge amount N(m) which is the difference between the NOx discharge amount Nθ(i) and the NOx reduction amount NU(m) is not more than the NOx limit Nlim, the combination which minimizes the injection amount Q(i) which is a fuel consumption amount and the combination which minimizes the urea solution injection amount U(n) which is a reduction agent consumption amount are calculated.

According to the configuration, the combinations having different configuration rate of the injection timing angle θ(i) of the fuel injection valves 4 and the urea solution injection amount U(n) of the urea solution which are the means for decreasing NOx are calculated. Accordingly, the combinations having different configuration rate of the injection timing angle θ(i) of the fuel injection valves 4 and the urea solution injection amount U(n) of the urea solution which are the means for decreasing NOx can be selected corresponding to the operation state of the engine 1 and the state of the exhaust purification system 10 while decreasing the final NOx discharge amount N(m) discharged to the outside air to be not more than the NOx limit Nlim.

The GPS receiver 19 is provided further, and the NOx limit Nlim is switched based on the position P calculated from the received GPS signal.

According to the configuration, the NOx limit Nlim corresponding to whereabouts of the engine 1 is set. Accordingly, the running cost C(m) of the engine 1 and the exhaust purification system 10 can be minimized while decreasing the final NOx discharge amount N(m) discharged to the outside air to be not more than the NOx limit Nlim.

Next, the exhaust purification system 10 according to a fifth embodiment of the present invention is explained referring to Figs. 9 to 11(b) and 11(c). In below embodiment, a concrete explanation of parts similar to the second embodiment explained already is omitted, and parts different to the second embodiment is explained mainly.

The engine 1 having the exhaust purification system 10 according to the fifth embodiment of the present invention is explained.

A control mode for calculating a configuration rate of the means for decreasing NOx by the control device 21 of the exhaust purification system 10 according to the fifth embodiment of the present invention is explained referring to Figs. 10, 11 (b) and 11(c).

Among the calculated combination of the EGR valve opening degree Vd(i) and the urea solution injection amount U(n) at which the calculated final NOx discharge amount N(m) is not more than the calculated NOx limit Nlim, the control device 21 calculates a combination the EGR valve opening degree Vd(i) and the urea solution injection amount U(n) which minimizes the injection amount Q(i). Furthermore, among the calculated combination of the EGR valve opening degree Vd(i) and the urea solution injection amount U(n) at which the calculated final NOx discharge amount N(m) is not more than the calculated NOx limit Nlim, the control device 21 calculates a combination the EGR valve opening degree Vd(i) and the urea solution injection amount U(n) which minimizes the urea solution injection amount U(n). Then, the control device 21 calculates a combination of the EGR valve opening degree Vd(i) and the urea solution injection amount U(n) based on the operation mode obtained from the input device. In addition to the EGR valve opening degree Vd(i), the injection timing angle θ(i) of the fuel may be controlled.

As the above, in the exhaust purification system 10 according to this embodiment, the EGR device 7 which makes a part of exhaust gas flow back to the intake pipe as EGR gas is provided further, and the EGR valve opening degree Vd(i) of the EGR device 7 is changed based on the rotation speed V and the injection amount Q(i) of the engine 1 so as to calculate the injection amount Q(i) which is varied and is the fuel consumption amount.

According to the configuration, the combinations having different configuration rate of the EGR valve opening degree Vd(i) of the EGR device 7 and the urea solution injection amount U(n) of the urea solution which are the means for decreasing NOx are calculated. Accordingly, the combination of the EGR valve opening degree Vd(i) of the EGR device 7 and the urea solution injection amount U(n) of the urea solution which are the means for decreasing NOx can be selected corresponding to the operation state of the engine 1 and the state of the exhaust purification system 10 while decreasing the final NOx discharge amount N(m) discharged to the outside air to be not more than the NOx limit Nlim.

A control mode for calculating a configuration rate of the means for decreasing NOx by the control device 21 of the exhaust purification system 10 according to a sixth embodiment of the present invention is explained referring to Figs. 13(a) to 13(c), 14(b) and 14(c). An explanation of parts similar to the third embodiment is omitted, and parts different to the third embodiment is explained.

Among the combination of the throttle valve opening degree Vi(i) and the urea solution injection amount U(n) at which the final NOx discharge amount N(m) is not more than the NOx limit Nlim, the control device 21 calculates a combination the throttle valve opening degree Vi(i) and the urea solution injection amount U(n) which minimizes the injection amount Q(i). Furthermore, among the combination of the throttle valve opening degree Vi(i) and the urea solution injection amount U(n) at which the final NOx discharge amount N(m) is not more than the NOx limit Nlim, the control device 21 calculates a combination the throttle valve opening degree Vi(i) and the urea solution injection amount U(n) which minimizes the urea solution injection amount U(n). Then, the control device 21 calculates a combination of the throttle valve opening degree Vi(i) and the urea solution injection amount U(n) based on the operation mode obtained from the input device. In addition to the throttle valve opening degree Vi(i), the injection timing angle θ(i) of the fuel and the EGR valve opening degree Vd(i) may be controlled by providing the EGR device.

As the above, in the exhaust purification system 10 according to this embodiment, the intake throttle valve 2a as a means for decreasing NOx is provided further in the intake pipe 2, and the throttle valve opening degree Vi(i) which is the opening degree of the intake throttle valve 2a is changed based on the rotation speed V and the injection amount Q(i) of the engine 1 so as to calculate the injection amount Q(i) which is varied and is the fuel consumption amount.

According to the configuration, the combinations having different configuration rate of the throttle valve opening degree Vi(i) of the intake throttle valve 2a and the urea solution injection amount U(n) of the urea solution which are the means for decreasing NOx are calculated. Accordingly, the combination of the throttle valve opening degree Vi(i) of the intake throttle valve 2a and the urea solution injection amount U(n) of the urea solution which are the means for decreasing NOx can be selected corresponding to the operation state of the engine 1 and the state of the exhaust purification system 10 while decreasing the final NOx discharge amount N(m) discharged to the outside air to be not more than the NOx limit Nlim.

The ship according to the present invention has the exhaust purification system 10 according to the fourth embodiment, the exhaust purification system 10 according to the fifth embodiment, or the exhaust purification system 10 according to the sixth embodiment.

According to the configuration, regardless of the NOx limit Nlim set with respect to an ocean space in which the ship 100 sails, a configuration rate of the injection timing angle θ(i) of the fuel injection valves 4 or the like and the urea solution injection amount U(n) of the urea solution which are the means for decreasing NOx is calculated. Accordingly, the combination of the injection timing angle θ(i) of the fuel injection valves 4 or the like and the urea solution injection amount U(n) of the urea solution which are the means for decreasing NOx can be selected corresponding to the operation state of the engine 1 and the state of the exhaust purification system 10 while decreasing the final NOx discharge amount N(m) discharged to the outside air to be not more than the NOx limit Nlim.

### Industrial Applicability

The present invention can be used for an art of an exhaust purification system and a ship having the exhaust purification system.

### Description of Notations

- 1: engine
- 3: exhaust pipe
- 4: fuel injection valve
- V: rotation speed
- θ(i): injection timing angle
- Q(i): injection amount
- Nθ(i): NOx discharge amount
- U(n): urea solution injection amount
- NU(m): NOx reduction amount
- N(m): final NOx discharge amount
- Nlim: NOx limit
- uu: unit price of urea solution
- Cu(n): urea solution cost
- Cf: unit price of fuel
- Cf(i): fuel cost
- C(m): running cost

## Claims

1. An exhaust purification system in which a catalyst is provided inside an exhaust pipe of an engine,
**characterized in that**
a NOx discharge amount with respect to an operation amount of a means for decreasing NOx of the engine is calculated based on an operation state of the engine,
a NOx reduction amount with respect to an injection amount of a reduction agent is calculated based on the operation state of the engine, and
a combination of the operation amount of the means for decreasing NOx and the injection amount of the reduction agent at which a difference between the NOx discharge amount and the NOx reduction amount is not more than a NOx limit is calculated.

2. The exhaust purification system according to claim 1, wherein among the combination of the operation amount of the means for decreasing NOx and the injection amount of the reduction agent, a combination which minimizes a sum of a cost of fuel with respect to the operation amount of the means for decreasing NOx calculated based on a unit price of the fuel and a cost of the reduction agent with respect to the injection amount of the reduction agent calculated based on a unit price of the reduction agent is calculated.

3. The exhaust purification system according to claim 2, wherein a fuel injection timing angle is controlled as the means for decreasing NOx and the fuel injection timing angle is changed based on the operation state of the engine so as to calculate the cost of the fuel which is varied.

4. The exhaust purification system according to claim 2 or 3, wherein a EGR device which makes a part of exhaust gas flow back to an intake pipe as EGR gas is provided further as the means for decreasing NOx, and an opening degree of the EGR valve is changed based on the operation state of the engine so as to calculate the cost of the fuel which is varied.

5. The exhaust purification system according to claim 1, wherein among the combination of the operation amount of the means for decreasing NOx and the injection amount of the reduction agent, a combination which minimizes a fuel consumption amount and a combination which minimizes the injection amount of the reduction agent are calculated.

6. The exhaust purification system according to claim 5, wherein a fuel injection timing angle is controlled as the means for decreasing NOx and the fuel injection timing angle is changed based on the operation state of the engine so as to calculate the cost of the fuel which is varied.

7. The exhaust purification system according to claim 5 or 6, wherein a EGR device which makes a part of exhaust gas flow back to an intake pipe as EGR gas is provided further as the means for decreasing NOx, and an opening degree of the EGR valve is changed based on the operation state of the engine so as to calculate the cost of the fuel which is varied.

8. The exhaust purification system according to any one of claims 5 to 7, wherein an intake throttle valve is provided further in the intake pipe as the means for decreasing NOx, and an opening degree of the intake throttle valve is changed based on the operation state of the engine so as to calculate the cost of the fuel which is varied.

9. The exhaust purification system according to any one of claims 1 to 8, wherein a GPS receiver is provided further, and the NOx limit is switched based on position information calculated from a received GPS signal.

10. A ship having the exhaust purification system according to any one of claims 1 to 9.
